# EUROPEAN PATENT SPECIFICATION

(11) **EP 2 639 123 B1**
(45) Date of publication and mention of the grant of the patent: **14.09.2016**
(21) Application number: 12159893.2
(22) Date of filing: 16.03.2012
(51) Int. Cl.: B60T 11/04, B60T 11/06, B62L 3/08

(54) **Brake auxiliary device**
Bremshilfsvorrichtung
Dispositif auxiliaire de frein

(43) Date of publication of application: 18.09.2013
(73) Proprietor: Ansure, Inc., New Taipei City 242 (TW)
(72) Inventor: Tseng, Ton-Rong, New Taipei City 220 (TW)
(74) Representative: Chaillot, Geneviève

(56) References cited:
- US-A- 4 773 509
- US-A1- 2004 079 186
- US-B1- 6 523 649

## Description

### BACKGROUND OF THE INVENTION

### 1. Field of the Invention

The present invention relates to a brake auxiliary device, and more particularly to a safe brake system applied to a two-wheel vehicle to effectively control the order and force of brake.

### 2. Description of the Prior Art

Two-wheel vehicles often comprise a pull-type brake device. A bike can be as a typical representative. In the past, a bike is a popular transportation vehicle. Due to the technology development, a bike becomes a transportation vehicle for a short distance because it is light and not expensive and can be operated with ease. Nowadays, riding bike becomes a leisure, sports, and competition way to provide multiple purposes.

These days, a bike uses a pull-type brake system which comprises left and right brake levers to control front and rear wheel brake through brake lines. The friction by the tire against the ground causes the bike to decelerate. It is noted, when the bike advances, the rider and the bike have forward inertial force. With acceleration of gravity, if the rider brakes his/her bike in a hurried way, the rider may fall from the bike to cause an accident because the brake is deadlocked.

Besides, most bikes are light and cannot generate great friction by the bike weight. When in an emergency, if the bike is braked to deadlock the rear wheel, the tire may slip or swing because the friction of the tire is not enough. If the bike is braked to deadlock the front wheel, the rider may fall from the bike easily because of inertia. Hence, the rider must pay attention to the brake order and force. As to the correct brake method, the rider should brake the rear wheel first and then the front wheel. Preferably, more brake force is applied to the rear wheel and less brake force is applied to the front wheel to avoid any accident. However, in an emergency situation, the rider often pulls the brake levers fully to stop his/her bike. This is the reason to cause an accident.

US patent application 2004/0079186 A1 discloses a brake auxiliary device according to the preamble of claim 1.

Accordingly, the inventor of the present invention has devoted himself based on his many years of practical experiences to solve these problems.

### SUMMARY OF THE INVENTION

The primary object of the present invention is to provide a brake auxiliary device. No matter which brake lever (the left brake lever or the right brake lever) is pulled, the rear wheel brake device is first activated and then the front wheel brake device is activated in a very short time. By using a simple design, the force for the front wheel brake and the rear wheel brake can be controlled, so that the force to brake the rear wheel is greater than the force to brake the front wheel.

In order to achieve the aforesaid object, the brake auxiliary device of the present invention comprises a casing and a link unit. The casing comprises a bottom board and a cover. The bottom board has a connection rod at a central portion thereof and a plurality of fixing holes at a circumferential portion thereof. The cover has a pair of connection portions extending from two sides thereof to connect the bottom board. The link unit comprises two movable members and a sleeve. Each movable member is a curved plate and has a connection hole at a central portion thereof. The two movable members are connected to the connection rod through the connection hole. Each movable member has upper and lower protrusions at upper and lower ends thereof. The upper protrusion has a first through hole and a second through hole. The lower protrusion has a third through hole and a fourth through hole. The sleeve is fitted on the connection rod and located between the two movable members. Two brake lines are inserted through the first through holes and the second through holes of the two movable members. A front brake line is inserted through the third through hole. A rear brake line is inserted through the fourth through hole. The middle sections of the two movable members are connected to the connection rod to form a simple link rod configuration. No matter which brake lever (the left brake lever or the right brake lever) is pulled, both the front and rear wheels are controlled to be braked. Through the curved design of the two movable members, the rear brake line is pulled more than the front brake line. Thereby, the force for the front wheel brake and the rear wheel brake can be controlled, so that the force to brake the rear wheel is greater than the force to brake the front wheel.

Preferably, the connection rod is provided with a spacer. The spacer is disposed between the bottom board and the link unit and secured to the connection rod through a nut. Through the spacer and the nut, the two movable members can be moved smoothly.

Preferably, the present invention further comprises a movable unit. Through this unit, when in an emergency, the present invention can prevent the front wheel or the rear wheel from being deadlocked.

Through the simple lever principle, the present invention provides a safe brake and has a simple configuration and can save the cost. Through the design of the curved moveable members, the size of the movable members can be decreased. The bottom board can be secured to a fixing seat by means of screws screwed to the fixing holes.

### BRIEF DESCRIPTION OF THE DRAWINGS

Fig. 1 is a perspective view of the present invention;
Fig. 2 is a schematic view showing the inner configuration of the present invention;
Fig. 3 is an exploded view of the present invention;
Fig. 4 is a schematic view showing the present invention not braked;
Fig. 5 is a schematic view showing the present invention braked;
Fig. 6 is another schematic view showing the present invention not braked;
Fig. 7 is another schematic view showing the present invention braked;
Fig. 8 is another schematic view showing the present invention braked; and
Fig. 9 is a schematic view showing the present invention connected to the fixing seat.

### DETAILED DESCRIPTION OF THE PREFERRED EMBODIMENTS

Embodiments of the present invention will now be described, by way of example only, with reference to the accompanying drawings.

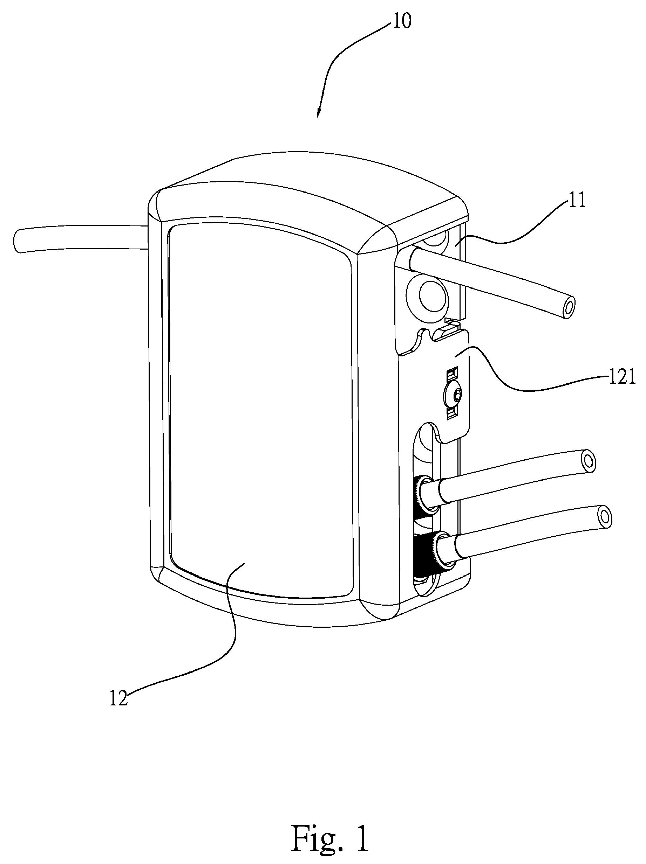

As shown in Fig. 1 through Fig. 3, the brake auxiliary device according to a preferred embodiment of the present invention comprises a casing 10 and a link unit 20. The casing 10 comprises a bottom board 11 and a cover 12. The bottom board 11 has a connection rod 111 at a central portion thereof and a plurality of fixing holes 112 at a circumferential portion thereof. The cover 12 has a pair of connection portions 121 extending from two sides thereof to connect the bottom board 11. The link unit 20 comprises two movable members 21 and a sleeve 22. Each movable member 21 is a curved plate and has a connection hole 215 at a central portion thereof. The two movable members 21 are symmetrical and connected to the connection rod 111 through the connection hole 215. Each movable member 21 has upper and lower protrusions 210 at upper and lower ends thereof. The upper protrusion 210 has a first through hole 211 and a second through hole 212. The lower protrusion 210 has a third through hole 213 and a fourth through hole 214. The sleeve 22 is fitted on the connection rod 111 and located between the two movable members 21.

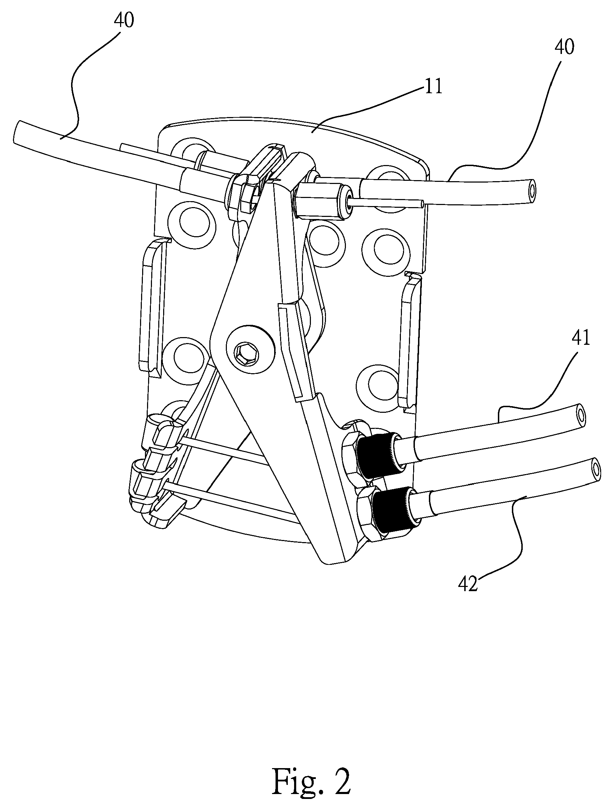

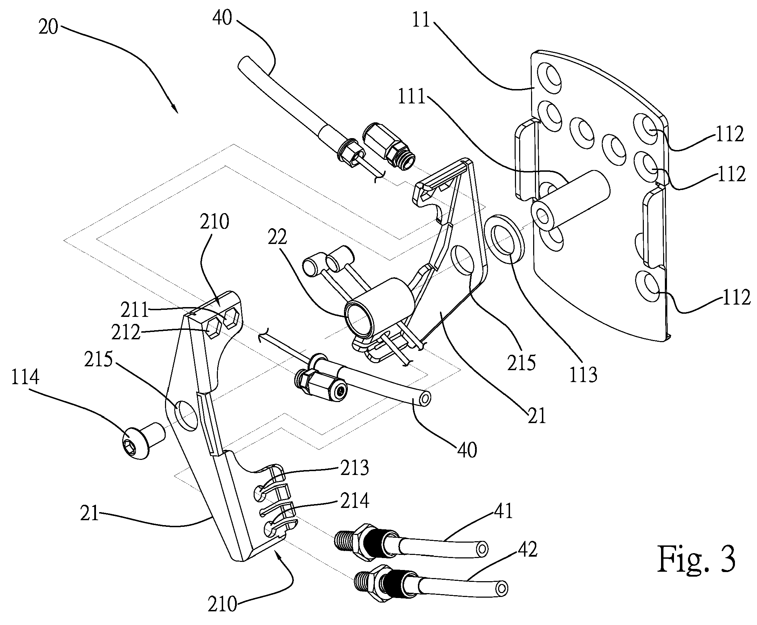

As shown in Fig. 2 and Fig. 3, the first through holes 211 and the second through holes 212 of the two movable members 21 are adapted for connection of two brake lines 40. The other ends of the two brake lines 40 are respectively connected to the left brake lever and the right brake lever. The third through hole 213 is adapted for connection of a front brake line 41. The other end of the front brake line 41 is connected to a front wheel brake device. The fourth through hole 214 is adapted for connection of a rear brake line 42. The other end of the rear brake line 42 is connected to a rear wheel brake device. The connection rod 111 is provided with a spacer 113 efor insertion of the connection rod. The spacer 113 is disposed between the bottom board and the link unit and secured to the connection rod 111 through a nut 114. Through the spacer 113 and the nut 114, the two movable members 21 can be moved smoothly.

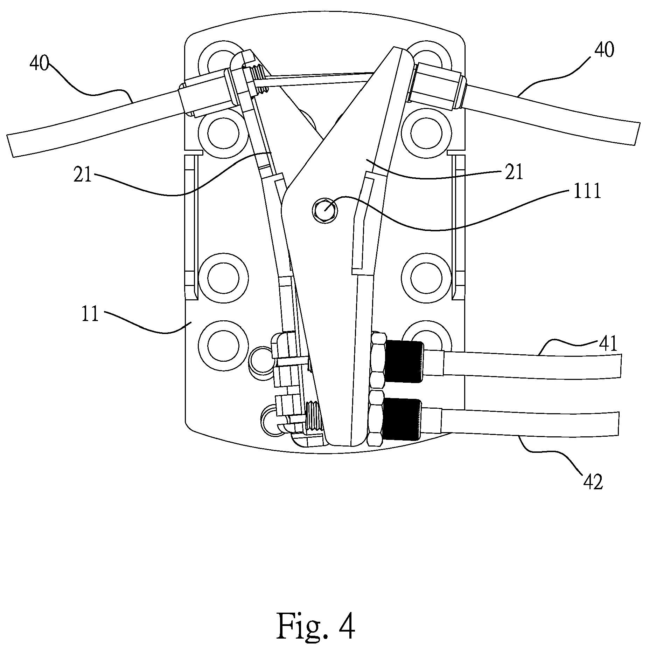

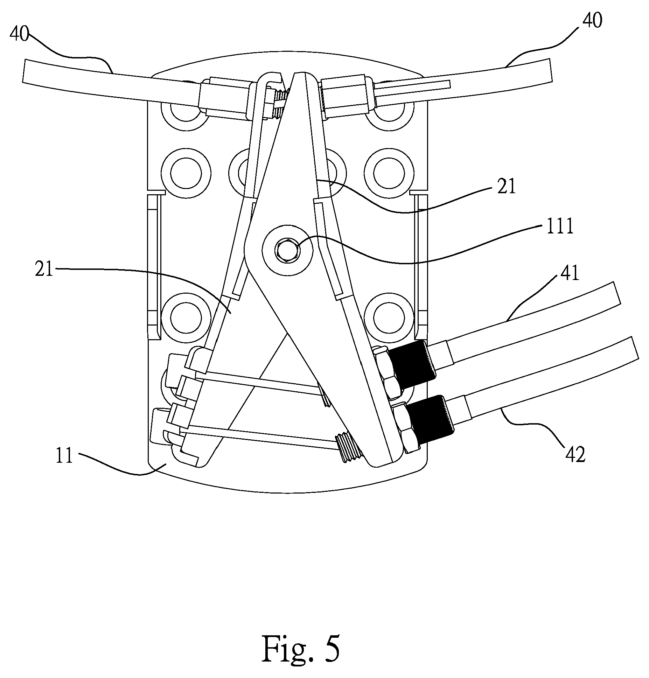

Fig. 4 is a schematic view showing the present invention not braked. When braked, no matter which brake lever (the left brake lever or the right brake lever) is pulled, the upper ends of the two moveable members 21 are pulled to approach each other through the brake lines 40. The connection rod 11 is fixed on the bottom board 11, so the lower ends of the two moveable members 21 are opened (as shown in Fig. 5) to pull the front brake line 41 and the rear brake line 42 so as to control the front wheel brake device and the rear wheel brake device. Referring to Fig. 4 and Fig. 5, through the curved design of the two movable members 21, when the two movable members 21 are turned at the same angle, the rear brake line 42 inserted through the fourth through hole 214 is pulled more than the front brake line 41 inserted through the third through hole 213 as known by the lever principle because the distance between the rear brake line 42 and the connection rod 11 (as the fulcrum) is greater than the distance between the front brake line 41 and the connection rod 11. Thereby, the force for the front wheel brake and the rear wheel brake can be controlled, so that the force to brake the rear wheel is greater than the force to brake the front wheel.

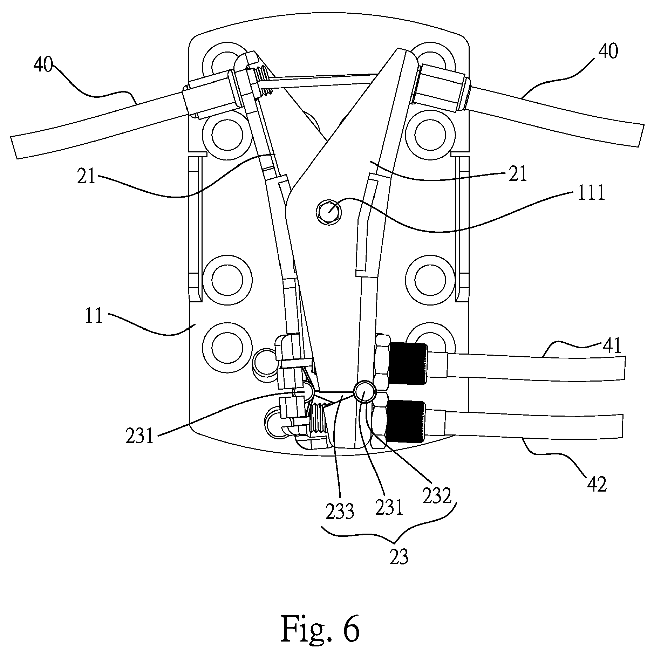

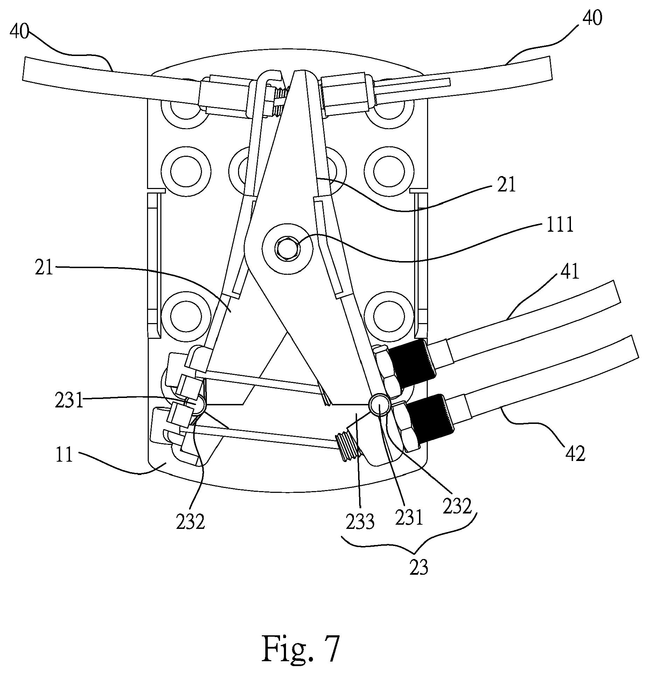

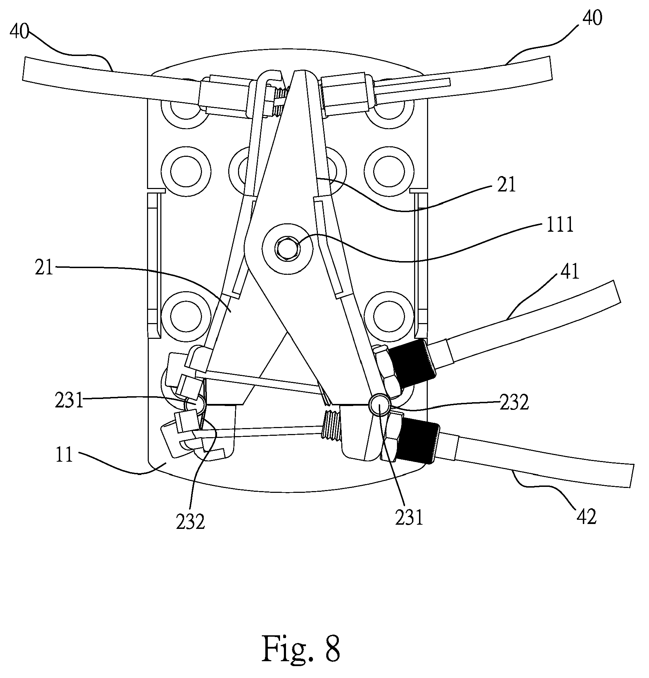

Referring to Fig. 6, the present invention further comprises a movable unit 23. The movable unit 23 is disposed between the third through holes 213 and the fourth through holes 214 of the two movable members 21. The movable unit 23 comprises a pivot rod 231, an elastic member 252 on the pivot rod 251 and a gap 233. As shown in Fig. 7 and Fig. 8, when the rider applies a great brake force in a very short time, through the movable unit, the fourth hole 214 can be turned inward with the pivot rod 251 as the axle center to form a buffer. Thus, when in an emergency, the present invention can prevent the front wheel or the rear wheel from being deadlocked because the brake lever is pressed much, providing a dual-protection effect.

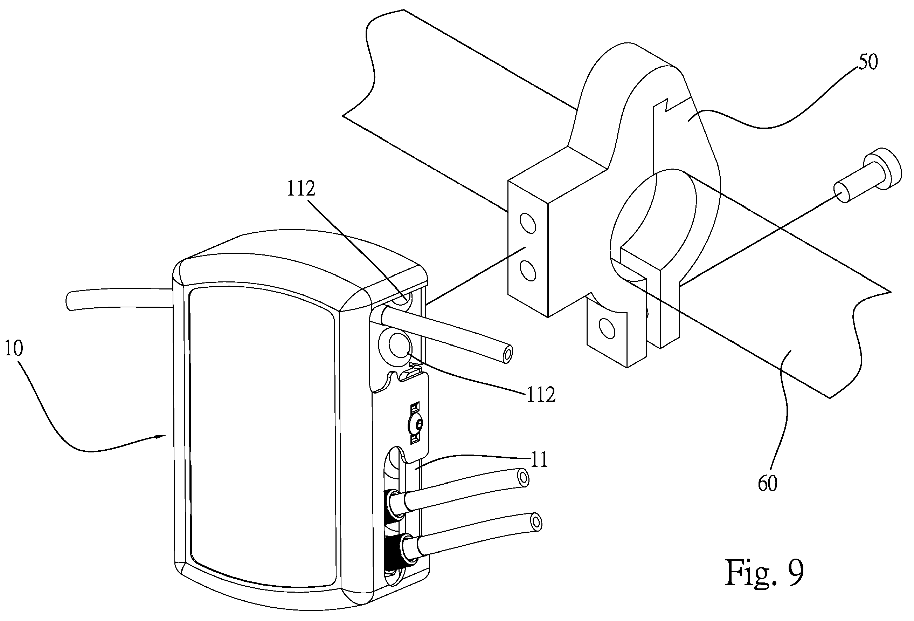

As shown in Fig. 9, the bottom board 11 can be locked to a fixing seat 50 by means of screws screwed to the fixing holes 112. The fixing seat 50 is connected to a two-wheel vehicle. As shown in the drawing, the fixing seat is connected to the crossbar of a bicycle stem. Through the design of the curved moveable members, the required moving space of the movable members can be decreased.

Although particular embodiments of the present invention have been described in detail for purposes of illustration, various modifications and enhancements may be made without departing from the scope of the present invention. Accordingly, the present invention is not to be limited except as by the appended claims.

## Claims

1. A brake auxiliary device, comprising a link unit (20) comprising two movable members (21), the two movable members (21) each being a plate and each having a connection hole (215) at a central portion thereof and two through holes, **characterized in that**:
the brake auxiliary device further comprises a casing (10) comprising a bottom board (11) and a cover (12), the bottom board (11) having a connection rod (111) at a central portion thereof and a plurality of fixing holes (112) at a circumferential portion thereof, the cover (12) having a pair of connection portions (121) extending from two sides thereof to connect the bottom board (11); and
the link unit (20) is disposed between the bottom board (11) and the cover (12), the link unit (20) further comprises a sleeve (22), the two movable members (21) each are a curved plate, the connection hole (215) is for insertion of the connection rod (111) and the two movable members (21) each have upper and lower protrusions (210) at upper and lower ends thereof, the upper protrusion (210) having a first through hole (211) and a second through hole (212), the lower protrusion (210) having a third through hole (213) and a fourth through hole (214), the sleeve (22) being fitted on the connection rod (111) and located between the two movable members (21).

2. The brake auxiliary device as claimed in claim 1, wherein the first through holes (211) and the second through holes (212) of the two movable members (21) are adapted for connection of two brake lines (40), the third through hole (213) is adapted for connection of a front brake line (41), and the fourth through hole (214) is adapted for connection of a rear brake line (42).

3. The brake auxiliary device as claimed in claim 2, wherein the connection rod (11) is provided with a spacer (113) disposed between the bottom board (11) and the link unit (20) and a nut (114) disposed at an end thereof.

4. The brake auxiliary device as claimed in claim 2, further comprising a movable unit (23) disposed between the third through holes (213) and the fourth through holes (214) of the two movable members (21), the movable unit (23) comprising a pivot rod (231), an elastic member (232) on the pivot rod (231) and a gap (233).

5. The brake auxiliary device as claimed in claim 2, wherein the bottom board (11) is locked to a fixing seat (50) through the fixing holes (112).

6. The brake auxiliary device as claimed in claim 3, further comprising a movable unit (23) disposed between the third through holes (213) and the fourth through holes (214) of the two movable members (21), the movable unit (23) comprising a pivot rod (231), an elastic member (232) on the pivot rod (231) and a gap (233).

7. The brake auxiliary device as claimed in claim 4, wherein the bottom board (11) is locked to a fixing seat (50) through the fixing holes (112).

8. The brake auxiliary device as claimed in claim 6, wherein the bottom board (11) is locked to a fixing seat (50) through the fixing holes (112).

9. The brake auxiliary device as claimed in claim 3, wherein the bottom board (11) is locked to a fixing seat (50) through the fixing holes (112).

## Patentansprüche

1. Bremshilfe, bestehend aus einer Verbindungseinheit (20) mit zwei beweglichen Gliedern (21), wobei jede der beiden beweglichen Glieder (21) eine Platte ist und jede über ein Verbindungsloch (215) an einem mittleren Teil davon und zwei Durchgangslöcher verfügt, **gekennzeichnet dadurch, dass**:
die Bremshilfe des Weiteren ein Gehäuse (10) mit Bodenbrett (11) und Abdeckung (12) umfasst, wobei das Bodenbrett (11) über einen Verbindungsstab (111) an einem mittleren Teil davon und eine Vielzahl von Befestigungsöffnungen (112) an einem Umfangsteil davon verfügt, die Abdeckung (12) besteht aus einem Paar Verbindungsteilen (121), die von zwei Seiten davon ausgehen, zur Verbindung mit dem Bodenbrett (11); und
die Verbindungseinheit (20) sich zwischen dem Bodenbrett (11) und der Abdeckung (12) befindet und außerdem eine Hülse (22) umfasst, wobei jedes der beiden beweglichen Glieder (21) eine gebogene Platte ist, die Verbindungsöffnung (215) dient zur Einfügung des Verbindungsstabs (111), und jedes der beiden beweglichen Glieder (21) einen oberen und einen unteren Vorsprung (210) am oberen und unteren Ende aufweist, der obere Vorsprung (210) verfügt über ein erstes (211) und ein zweites Durchgangsloch (212), der untere Vorsprung (210) über ein drittes (213) und ein viertes Durchgangsloch (214), die Hülse (22) ist am Verbindungsstab (111) angebracht und befindet sich zwischen den beiden beweglichen Gliedern (21).

2. Bremshilfe nach Anspruch 1, wobei die ersten Durchgangslöcher (211) und die zweiten Durchgangslöcher (212) der beiden beweglichen Glieder (21) zur Verbindung zwei Bremsleitungen (40) angepasst sind, das dritte Durchgangsloch (213) ist zur Verbindung einer vorderen Bremsleitung (41) angepasst, und das vierte Durchgangsloch (214) ist zur Verbindung einer hinteren Bremsleitung (42) angepasst.

3. Bremshilfe nach Anspruch 2, wobei der Verbindungsstab (11) mit einem Abstandhalter (113) ausgestattet ist, der zwischen dem Bodenbrett (11) und der Verbindungseinheit (20) positioniert ist, sowie einer Mutter (114), die an einem Ende davon angebracht ist.

4. Bremshilfe nach Anspruch 2, die außerdem eine bewegliche Einheit (23) zwischen den dritten Durchgangslöchern (213) und den vierten Durchgangslöchern (214) der beiden beweglichen Glieder (21) umfasst, wobei die bewegliche Einheit (23) aus einem Drehstab (231), einem elastischen Element (232) auf dem Drehstab (231) und einer Lücke (233) besteht.

5. Bremshilfe nach Anspruch 2, wobei das Bodenbrett (11) durch die Befestigungsöffnungen (112) mit einer Befestigungsaufnahme (50) fest verbunden ist.

6. Bremshilfe nach Anspruch 3, umfassend außerdem eine bewegliche Einheit (23) zwischen den dritten Durchgangslöchern (213) und den vierten Durchgangslöchern (214) der beiden bewegliche Glieder (21), wobei die bewegliche Einheit (23) einen Drehstab (231), ein elastisches Element (232) an dem Drehstab (231) und eine Lücke (233) umfasst.

7. Bremshilfe nach Anspruch 4, wobei das Bodenbrett (11) durch die Befestigungsöffnungen (112) mit einer Befestigungsaufnahme (50) fest verbunden ist.

8. Bremshilfe nach Anspruch 6, wobei das Bodenbrett (11) durch die Befestigungsöffnungen (112) mit einer Befestigungsaufnahme (50) fest verbunden ist.

9. Bremshilfe nach Anspruch 3, wobei das Bodenbrett (11) durch die Befestigungsöffnungen (112) mit einer Befestigungsaufnahme (50) fest verbunden ist.

## Revendications

1. Dispositif auxiliaire de frein, comprenant une unité de liaison (20) comprenant deux éléments mobiles (21), les deux éléments mobiles (21) étant chacun une plaque et ayant chacun un trou de liaison (215) à une partie centrale de celui-ci et deux trous traversants, **caractérisé par** le fait qui :
le dispositif auxiliaire de frein comprend en outre un boîtier (10) comprenant une plaque de fond (11) et un couvercle (12), la plaque de fond (11) ayant une tige de liaison (111) au niveau d'une partie centrale de celle-ci et une pluralité de trous de fixation (112) au niveau d'une partie circonférentielle de celle-ci, le couvercle (12) ayant une paire de parties de liaison (121) s'étendant à partir de deux côtés de celui-ci pour relier la plaque de fond (11) ; et
l'unité de liaison (20) est disposée entre la plaque de fond (11) et le couvercle (12), l'unité de liaison (20) comprend en outre un manchon (22), les deux éléments mobiles (21) sont chacun une plaque incurvée, le trou de liaison (215) est destiné à une introduction de la tige de liaison (111) et les deux éléments mobiles (21) ont chacun des saillies supérieure et inférieure (210) aux extrémités supérieure et inférieure de ceux-ci, la saillie supérieure (210) ayant un premier trou traversant (211) et un deuxième trou traversant (212), la saillie inférieure (210) ayant un troisième trou traversant (213) et un quatrième trou traversant (214), le manchon (22) étant monté sur la tige de liaison (111) et situé entre les deux éléments mobiles (21).

2. Dispositif auxiliaire de frein selon la revendication 1, dans lequel les premiers trous traversants (211) et les deuxièmes trous traversants (212) des deux éléments mobiles (21) sont adaptés pour la liaison de deux lignes de frein (40), le troisième trou traversant (213) est adapté pour la liaison d'une ligne de frein avant (41), et le quatrième trou traversant (214) est adapté pour la liaison d'une ligne de frein arrière (42).

3. Dispositif auxiliaire de frein selon la revendication 2, dans lequel la tige de liaison (11) comporte une entretoise (113) disposé entre la plaque de fond (11) et l'unité de liaison (20), et un écrou (114) disposé à une extrémité de celle-ci.

4. Dispositif auxiliaire de frein selon la revendication 2, comprenant en outre une unité mobile (23) disposée entre les troisièmes trous traversants (213) et les quatrièmes trous traversants (214) des deux éléments mobiles (21), l'unité mobile (23) comprenant une tige de pivotement (231), un élément élastique (232) sur la tige de pivotement (231), et un intervalle (233).

5. Dispositif auxiliaire de frein selon la revendication 2, dans lequel la plaque de fond (11) est verrouillée à un siège de fixation (50) à travers les trous de fixation (112).

6. Dispositif auxiliaire de frein selon la revendication 3, comprenant en outre une unité mobile (23) disposée entre les troisièmes trous traversants (213) et les quatrièmes trous traversants (214) des deux éléments mobiles (21), l'unité mobile (23) comprenant une tige de pivotement (231), un élément élastique (232) sur la tige de pivotement (231), et un intervalle (233).

7. Dispositif auxiliaire de frein selon la revendication 4, dans lequel la plaque de fond (11) est verrouillée à un siège de fixation (50) à travers les trous de fixation (112).

8. Dispositif auxiliaire de frein selon la revendication 6, dans lequel la plaque de fond (11) est verrouillée à un siège de fixation (50) à travers les trous de fixation (112).

9. Dispositif auxiliaire de frein selon la revendication 3, dans lequel la plaque de fond (11) est verrouillée à un siège de fixation (50) à travers les trous de fixation (112).
